# EUROPEAN PATENT APPLICATION

(11) **EP 3 725 599 A1**
(43) Date of publication of application: **21.10.2020**
(21) Application number: 18888953.9
(22) Date of filing: 14.12.2018
(51) Int. Cl.: B60R 16/037

(54) **USER VEHICLE USE PREFERENCE CONFIGURATION SETTING**

(30) Priority: 15.12.2017 CN 201711346247
(71) Applicant: Nio Nextev Limited, Hong Kong (CN)
(72) Inventor: SHI, Junjie, Hong Kong (CN); ZHU, Hao, Hong Kong (CN)
(74) Representative: Vossius & Partner Patentanwälte Rechtsanwälte mbB
(86) International application number: PCT/CN2018/121075
(87) International publication number: WO 2019/114809

(57) **Abstract**

A setting system for vehicle use preference configurations, comprising: a retrieving unit (110) for retrieving corresponding vehicle use preference configurations according to a user identity of a user; and a sending unit (120) for sending the retrieved vehicle use preference configurations to one or more corresponding components of a vehicle. The setting system can automatically set vehicle configurations according to user habits or preferences, thereby improving the user experience.

## Description

### Technical Field

The invention relates to the technical field of vehicle intelligent control, and relates to the automatic setting for vehicle use preference configurations of a user.

### Background Art

The settings of many components (such as seats and a steering wheel) of the vehicle can be adjusted on a personalized basis. When driving a vehicle, users will set personalized vehicle use preference configurations based on their body shapes or preferences, such as the steering wheel position, the seat position, the rearview-mirror underside position, driving assistance settings (such as adaptive cruise control function switch settings, and prompting settings for being too close to the front), driving modes, etc.

However, after a vehicle is used or driven by different users, the vehicle use preference configurations may be changed, so that the current user needs to set the vehicle use preference configurations again according to their preferences after getting on the vehicle, which is relatively time-consuming and laborious especially when resetting the vehicle use preference configurations for many components is involved.

Chinese Patent Publication No. CN 103935267A, entitled "INTELLIGENTLY ADJUSTABLE VEHICLE SEAT", discloses intelligent pre-adjustment for a single component of a vehicle according to the preferences of a user, specifically by detecting the weight borne by a seat to realize the front-rear and up-down adjustment of the front pillow surface of the seat and the curvature adjustment of the back of the seat, or by a memory remembering the position, set by the user for the first time, to facilitate the re-adjustment by the user. However, such intelligent setting cannot accurately determine the current user identity and the desired setting, so it cannot bring a better user experience.

### Summary of the Invention

One of the objectives of the invention is to improve the user experience of using a vehicle.

Another objective of the invention is to realize the automatic setting for vehicle use preference configurations corresponding to a certain user.

To realize the objectives above or other objectives, the invention provides the technical solutions as follows.

According to a first aspect of the invention, a setting system for vehicle use preference configurations is provided, comprising:
a retrieving unit for retrieving corresponding vehicle use preference configurations according to a user identity of a user; and
a sending unit for sending the retrieved vehicle use preference configurations to one or more corresponding components of a vehicle.

In the setting system according to an embodiment of the invention, the retrieving unit is further configured to comprise:
a recognition component for recognizing a key identity of a key used to unlock the vehicle; and
an association module for associating the key identity with the corresponding user identity.

In the setting system according to an embodiment of the invention, the vehicle use preference configurations comprise at least one of the following: a steering wheel position, a seat position, a rearview-mirror underside position, driving assistance settings and a driving mode.

In the setting system according to an embodiment of the invention, the retrieving unit is further configured to locally retrieve corresponding vehicle use preference configurations from the vehicle or remotely retrieve corresponding vehicle use preference configurations.

In the setting system according to an embodiment of the invention, the retrieving unit is further configured to enable the user to remotely retrieve the vehicle use preference configurations corresponding to the user identity from the vehicle by remotely logging in with the user identity of the user.

The setting system according to an embodiment of the invention further comprises a local storage unit for locally storing the vehicle use preference configurations corresponding to all the user identities that have been registered in the vehicle.

In the setting system according to an embodiment of the invention, the setting system is also coupled to a remote storage end which is used for remotely storing vehicle use preference configurations corresponding to all the user identities that have been registered in different vehicles.

In the setting system according to an embodiment of the invention, the local storage unit and the remote storage end further store a time stamp for the vehicle use preference configurations corresponding to the user identity at each time of modification and update.

The setting system according to an embodiment of the invention further comprises a synchronization unit for managing synchronization and update between the vehicle use preference configurations for the same user identity that are respectively stored in the local storage unit and the remote storage end.

In the setting system according to an embodiment of the invention, the synchronization unit is further configured to: determine the direction of data synchronization between the local storage unit and the remote storage end according to respective latest modification and update time of the vehicle use preference configurations for the same user identity at the local storage unit and the remote storage end.

In the setting system according to an embodiment of the invention, the retrieving unit, the sending unit and the local storage unit are arranged in a central gateway of the vehicle, or implemented by the central gateway of the vehicle.

In the setting system according to an embodiment of the invention, the remote storage end is arranged in a telematics service provider, or in the cloud.

In the setting system according to an embodiment of the invention, the setting system is further configured to allow a mobile terminal to log in with the user identity, and to manage the vehicle use preference configurations corresponding to the user identity.

According to a second aspect of the invention, a vehicle is provided, which is configured with any one of the above setting systems for vehicle use preference configurations.

According to a third aspect of the invention, an automatic setting method for vehicle use preference configurations of a user is provided, comprising the steps of:
retrieving corresponding vehicle use preference configurations according to a user identity of the user; and
sending the retrieved vehicle use preference configurations to one or more corresponding components of a vehicle.

The automatic setting method according to an embodiment of the invention further comprises the steps of:
recognizing a key identity of a key used to unlock the vehicle; and
associating the key identity with the corresponding user identity.

In the automatic setting method according to an embodiment of the invention, the use preference configurations comprise at least one of the following: a steering wheel position, a seat position, a rearview-mirror underside position, driving assistance settings and a driving mode.

In the automatic setting method according to an embodiment of the invention, in the step of retrieving vehicle use preference configurations:
corresponding vehicle use preference configurations are locally retrieved from the vehicle or corresponding vehicle use preference configurations are remotely retrieved.

The automatic setting method according to an embodiment of the invention further comprises a step of updating and storing the vehicle use preference configurations: when at least one of the vehicle use preference configurations of the user is modified and updated, updating and storing the vehicle use preference configuration based on the user identity of the user.

In the automatic setting method according to an embodiment of the invention, in the step of updating and storing the vehicle use preference configurations, the vehicle storage preference configurations are locally updated and stored in a local storage unit of the vehicle.

In the automatic setting method according to an embodiment of the invention, the step of updating and storing the vehicle use preference configurations further comprises a sub-step of synchronization: determining the direction of data synchronization between the local storage unit and the remote storage end according to respective modification and update time of the vehicle use preference configurations for the same user identity at the local storage unit and the remote storage end.

In the automatic setting method according to an embodiment of the invention, the sub-step of synchronization comprises:
synchronizing the vehicle use preference configurations corresponding to the same user identity that are stored in a local storage unit of a first vehicle with a relatively late modification and update time to a remote storage end corresponding to the same user identity; and/or
synchronizing the vehicle use preference configurations corresponding to the same user identity that are stored in the remote storage end with a relatively late modification and update time to a local storage unit in a second vehicle corresponding to the same user identity.

In the automatic setting method according to an embodiment of the invention, in the step of updating and storing the vehicle use preference configurations, at each time of update and storage, a corresponding time stamp is simultaneously stored to indicate the modification and update time of the updated and stored vehicle use preference configurations; and
in the sub-step of synchronization, based on the time stamp, it is determined which of the modification and update time of the vehicle use preference configurations corresponding to the same user identity that are respectively stored in the local storage unit and the remote storage end is relatively late.

According to a fourth aspect of the invention, a computer device is provided, comprising a memory, a processor, and a computer program stored on the memory and operable on the processor, characterized in that the processor, when executing the program, implements the steps of any one of the above automatic setting methods.

According to a fifth aspect of the invention, a computer-readable storage medium having a computer program stored thereon is provided, characterized in that the program is executed to implement the steps of any one of the above automatic setting method.

According to the invention, the user's habitual or preferred vehicle use preference configurations can be intelligently and automatically set according to the user, and the vehicle use preference configurations of all components can be automatically set at the same time, thus greatly improving the user experience.

### Brief Description of the Drawings

The above and other objectives and advantages of the invention will be more thorough and clearer from the following detailed description in conjunction with the drawings, wherein the same or similar elements are represented by the same reference numerals.
Fig. 1 is a schematic structural diagram of an automatic setting system for vehicle use preference configurations according to an embodiment of the invention.
Fig. 2 is a flow chart of an automatic setting method for vehicle use preference configurations according to an embodiment of the invention.
Fig. 3 is a schematic diagram of the update and storage process of vehicle use preference configurations according to an embodiment of the invention.

### Detailed Description of Embodiments

The following is a description of exemplary embodiments of the invention, examples of which are illustrated in the drawings. Whenever possible, the same reference numbers will be used throughout the drawings to refer to the same or similar parts.

For the sake of brevity and illustrative purposes, this document mainly describes the principles of the invention with reference to its exemplary embodiments. However, those skilled in the art will readily recognize that the same principles can be equivalently applied to all types of setting systems for vehicle use preference configurations and automatic setting methods for vehicle use preference configurations, and these same principles can be implemented therein. Any such changes do not depart from the true spirit and scope of this patent application. Moreover, in the following description, reference is made to the accompanying drawings, which illustrate specific exemplary embodiments. Electrical, mechanical, logical, and structural changes can be made to these embodiments without departing from the spirit and scope of the invention. Furthermore, although the features of the invention are disclosed in combination with only one of several implementations/embodiments, if any given or recognizable function may be desired and/or advantageous, this feature can be combined with one or more other features of other implementations/embodiments. Therefore, the following description should not be considered in a limiting sense, and the scope of the invention is defined by the appended claims and their equivalents.

The invention is described below with reference to flowchart illustrations, block diagrams and/or flowcharts of systems and methods according to embodiments of the invention. It will be understood that each block of these flowchart illustrations and/or block diagrams, and combinations of flowchart illustrations and/or block diagrams, can be implemented by computer program instructions. These computer program instructions can be provided to the processor of a general-purpose computer, special-purpose computer, or other programmable data processing device to form a machine, so that these instructions executed by the processor of the computer or other programmable data processing device create components for implementing the functions/operations specified in these flowcharts and/or blocks and/or one or more flow diagrams.

These computer program instructions can be stored in a computer-readable memory, and these instructions can instruct a computer or other programmable processors to implement functions in a specific manner, so that these instructions stored in the computer-readable memory constitute a manufactured product that contains instruction components that implement the functions/operations specified in one or more blocks of the flowcharts and/or block diagrams.

These computer program instructions can be loaded onto a computer or other programmable data processor to cause a series of operating steps to be executed on the computer or other programmable processors to form a computer-implemented process, so that these instructions executed on the computer or other programmable data processors provide steps for implementing the functions or operations specified in one or more blocks of this flowchart and/or block diagram. It should also be noted that in some alternative implementations, the functions/operations shown in the blocks may occur out of the order shown in the flowchart. For example, two blocks shown in sequence may actually be executed substantially simultaneously or the blocks may sometimes be executed in a reverse order, depending on the functions/operations involved.

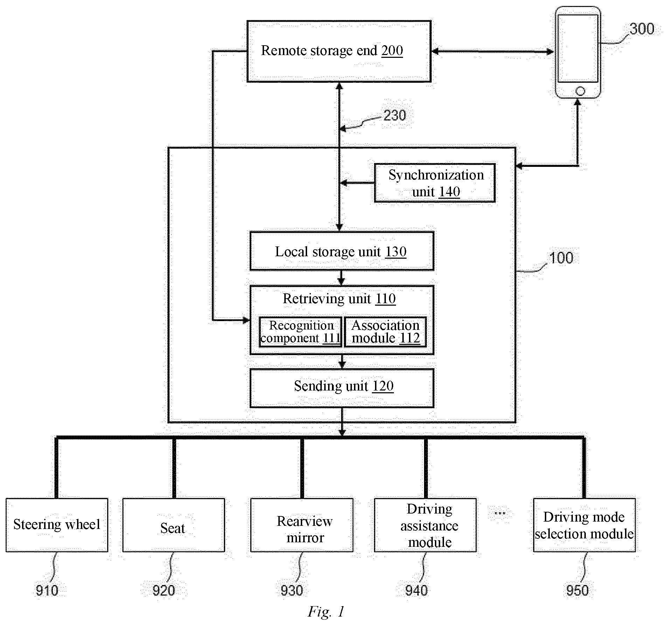

Fig. 1 shows a schematic structural diagram of an automatic setting system for vehicle use preference configurations according to an embodiment of the invention. A setting system 100 of this embodiment can manage vehicle use preference settings of a user according to a user ID, and can be used to automatically implement the setting for vehicle use preference configurations of a certain user on a certain vehicle. Since each user has different preferences or habits, for example, when driving a certain type of vehicle, each user will set corresponding vehicle use preference configurations, so as to make the driving operation more comfortable or more habitual.

Depending on the type of vehicle, there may be different kinds of components for which the adjustment of settings can be performed, so that the vehicle use preference configurations may also be different. The vehicle use preference configurations of a same user may also be modified and updated, so that they may become different in different time periods. In an embodiment, the components for which the adjustment of settings can be performed in a certain vehicle or a certain type of vehicle comprise one or more of a steering wheel 910, a seat 920, a rearview mirror 930, a driving assistance module 940, and a driving mode selection module 950 as shown in Fig. 1. Accordingly, the vehicle use preference configurations comprise at least one of the following: a steering wheel position, a seat position, a rearview-mirror underside position, driving assistance settings and a driving mode. The vehicle use preference configurations can be stored in the form of a file, wherein the configuration corresponding to each component can be stored in the form of a sub-file under the file, and the specific storage form is not restrictive. The vehicle use preference configurations may be stored in a local storage unit 130 or in a remote storage end 200.

As shown in Fig. 1, in an embodiment, a setting system 100 for vehicle use preference configurations comprises a retrieving unit 110, wherein the retrieving unit 110 is used for retrieving corresponding vehicle use preference configurations according to a user identity (ID) of the user, i.e., retrieving the vehicle use preference configurations of the user based on a user ID.

When retrieving, the retrieving unit 110 may locally retrieve the corresponding vehicle use preference configurations from the vehicle (for example, directly from the local storage unit 130) or remotely retrieve the corresponding vehicle use preference configurations (for example, remotely from the remote storage end 200).

It should be understood that, when the local storage unit 130 stores vehicle use preference configuration data of the user ID of the corresponding user, the data is preferentially retrieved from the local storage unit 130, so that the response speed is fast. When the local storage unit 130 does not store the vehicle use preference configuration data of the user ID of the corresponding user (when this user drives this vehicle for the first time), the retrieving unit 110 is further configured to enable the user to remotely retrieve the vehicle use preference configuration data corresponding to the user ID of the user from the vehicle by remotely logging in with this user ID. Specifically, if the retrieving unit 110 has not detected the current user ID in the local storage unit 130, or if the vehicle use preference configuration data corresponding to the user ID is 0 or unavailable, an HMI (human-machine interaction) may pop up on the central control screen of the vehicle, for example, to guide the user to remotely log in with the user ID, for example, log in to the remote storage end 200, and then the retrieving unit 110 may retrieve the vehicle use preference configuration data corresponding to the user ID from the remote storage end 200. Of course, the vehicle use preference configuration data corresponding to the user ID that is retrieved from the remote storage end 200 may also be stored under the corresponding user ID in the local storage unit 130, and at this time, the user completes the registration or recording of the user ID on the vehicle as a new user.

It will be understood that the vehicle has already established, for example, a network connection with the remote storage end 200 during the above remote retrieving process.

Continuing with what is shown in Fig. 1, the setting system 100 for vehicle use preference configurations comprises a sending unit 120 for sending the retrieved vehicle use preference configurations to one or more corresponding components of the vehicle. For example, the configuration data corresponding to the steering wheel position in a file of the vehicle use preference configurations is sent to the steering wheel 910, and the configuration data corresponding to the seat position in the file of vehicle use preference configurations is sent to the seat 920. Specifically, it can be sent to various components through the CAN bus, so that the sending speed is fast.

Each component of the vehicle can automatically perform adjustment of settings after receiving the corresponding vehicle use preference configuration. For example, the steering wheel 910 automatically completes the adjustment of settings of the steering wheel based on the corresponding configuration data, and the seat 920 automatically completes the adjustment of settings of the seat based on the corresponding configuration data. In this way, even if there are multiple corresponding components, the automatic adjustment of settings of multiple components can be completed at the same time, and a relatively preferred state is achieved for this user, and there is no need to perform adjustment of settings on the components one by one, thus leading to high efficiency and good experience.

The setting system 100 of the above embodiment may be specifically arranged in a central gateway (CGW) of the vehicle, or implemented by the CGW of the vehicle. In this way, the above retrieving and sending actions are correspondingly fast.

In an embodiment, in order to further improve the user experience, the retrieving unit 110 is further configured with a recognition component 111 and an association module 112, wherein the recognition component 111 is used for recognizing a key identity (i.e., a key ID) of the key that unlocks the vehicle, and the association module 112 is used for associating the key ID with the corresponding user ID. In this way, once the user unlocks the vehicle with the key, the key ID of the key will be recognized by the recognition component 111, and the association module 112 further obtains the user ID of the user through association based on the key ID, so that when the user is performing the operation of unlocking the vehicle with the key, the settings of the steering wheel 910, the seat 920 and other components of the vehicle can be automatically adjusted to the user's preferred state, without the need of manually setting various components or adjusting the settings of various components one by one.

Specifically, the association module 112 may be implemented by means of a mapping relationship table stored in the setting system 100. The mapping relationship table is specifically given as an example in Table I below.

**Table I**

| **Key ID** | **User ID** |
|---|---|
| 12345678 | 100001 |
| 11111111 | 100005 |
| 22222222 | 100001 |

The association module 112 searches the mapping relationship table for the currently recognized key ID, so that the corresponding user ID can be obtained through association.

It will be understood that a user ID (for example, "100001") may have multiple key IDs (for example, "12345679" and "2222222"). In this case, one user may have keys for two vehicles; Of course, one user ID may have more key IDs.

It will be understood that one vehicle may be provided with two or more keys, and the two or more keys may be assigned to different users. When the vehicle is unlocked with a certain key, the user or the user's user ID can be obtained through association with the key ID of the key.

Continuing with what is shown in Fig. 1, in an embodiment, the setting system 100 further includes a local storage unit 130. The local storage unit 130 is used for locally storing the vehicle use preference configurations corresponding to all user IDs that have been registered in the vehicle. The vehicle use preference configuration data is stored in the form of a folder, for example. The vehicle use preference configurations of each user can be updated. For example, when the user is manually adjusting the settings of the steering wheel and other components while logged in with the user ID, the vehicle use preference configuration data corresponding to the component of which the settings are adjusted has already been subject to modifications and updates, and it will be updated and stored into the local storage unit 130. In addition, each time the vehicle use preference configurations of each user ID are updated and stored, a corresponding time stamp may be stored to indicate the modification and update time of the vehicle use preference configurations.

Continuing with what is shown in Fig. 1, in an embodiment, the setting system 100 is also coupled to a remote storage end 300. The remote storage end 300 is used for remotely storing vehicle use preference configurations corresponding to all user IDs that have been registered in different vehicles. For example, different vehicle use preference configurations for n user IDs have already been registered in vehicle A, different vehicle use preference configurations for m user IDs have already been registered in vehicle B, and different vehicle use preference configurations for y user IDs have already been registered in vehicle C. They can all be stored in the remote storage end 300 in the form corresponding to user IDs. It will be understood that the vehicle use preference configurations of the same user ID on different vehicles (for example, different vehicles of the same type) may be stored in the remote storage end 300 corresponding to the user ID. Likewise, in the remote storage end 300, a time stamp may also be stored, which indicates the modification and update time of the vehicle use preference configurations of each user ID.

In an embodiment, the remote storage end 300 is arranged in a telematics service provider (TSP), wherein the TSP can establish a connection with the vehicle through a network (such as Internet of Vehicles), thereby achieving at least the transmission of the vehicle use preference configuration data. In yet another alternative embodiment, the remote storage end 300 may be arranged in the cloud, so as to be implemented in a cloud storage manner. It will be understood that the specific implementation of the remote storage end 300 is not limited to the above embodiment, and it may be implemented by various forms of data service centers.

Continuing with what is shown in Fig. 1, in an embodiment, the setting system 100 further includes a synchronization unit 140. The synchronization unit 140 is used for managing synchronization and update between the vehicle use preference configurations for the same user ID respectively stored in the local storage unit 130 and the remote storage end 200, wherein reference numeral 230 indicates a synchronization and update process of the vehicle use preference configuration data between the local storage unit 130 and the remote storage end 200. Specifically, the synchronization unit 140 may also be integrated and arranged in the CGW, and the synchronization unit 140 provided for each vehicle is used for synchronization and update of the vehicle use preference configuration data between the local storage unit 130 of this vehicle and the remote storage end 200.

In an embodiment, the synchronization unit 140 is further configured to: determine the direction of data synchronization between the local storage unit 140 and the remote storage end 200 according to respective latest modification and update time of the vehicle use preference configurations for the same user ID at the local user storage unit 140 and the remote storage end 200, wherein the latest modification and update time is indicated by a time stamp. For example, assuming that for a certain user ID, the latest modification and update time of the vehicle use preference configurations stored in the local storage unit 140 of vehicle A is t1, and the latest modification and update time of the vehicle use preference configurations stored in the remote storage end 200 is t2 (for example, the user logs in with the user ID in vehicle B and modifies and updates the vehicle use preference configurations at time t2, and the vehicle use preference configurations modified and updated at time point t2 are directly or indirectly updated and stored into the remote storage end 200). If t1 is later than t2, the vehicle use preference configurations stored in the local storage unit 140 are sent to the remote storage end 200 for synchronization and update, and accordingly, the latest modification and update time of the vehicle use preference configurations stored in the remote storage end 200 changes to t1. Conversely, if t1 is earlier than t2, the vehicle use preference configurations stored in the remote storage end 200 are sent to the local storage unit 140 for synchronization and update, and accordingly, the latest modification and update time of the vehicle use preference configurations stored in the local storage unit 140 changes to t2. In this way, it can be realized that the vehicle use preference configurations stored in local storage units 140 of different vehicles and the remote storage end 200 are the vehicle use preference configurations which were adjusted and modified by the user at the latest time.

Continuing with what is shown in Fig. 1, in an embodiment, the setting system 100 is further configured to allow the mobile terminal 300 to log in with the user ID, and to manage the vehicle use preference configurations corresponding to the user ID. For example, the mobile terminal 300 can log in to the remote storage end 200 with the user ID, and perform data management on the vehicle use preference configurations of this user ID, such as performing update and transmission of data; or it can log in to the local storage unit 140 with the user ID and perform data management on the vehicle use preference configurations of this user ID, for example, performing update and transmission of data.

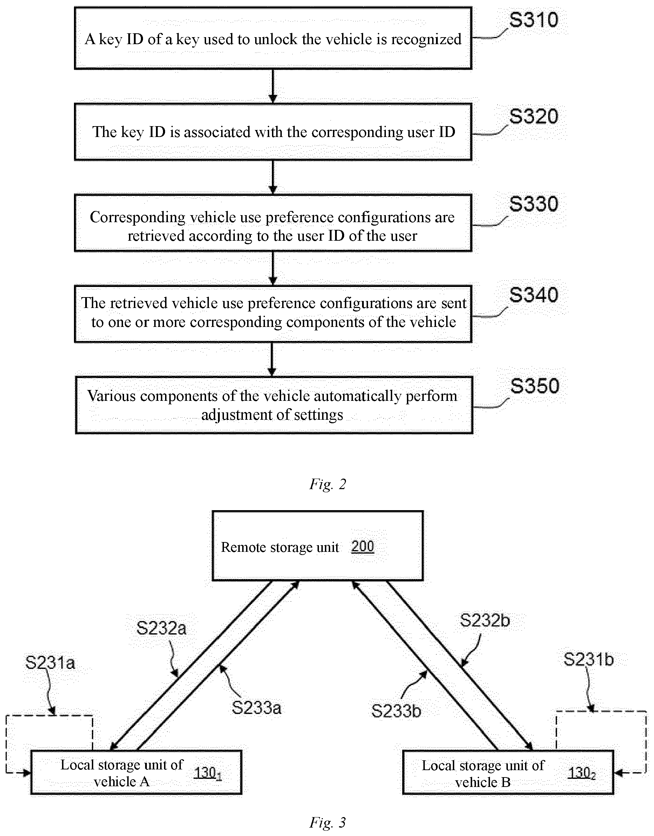

Fig. 2 shows a flow chart of an automatic setting method for vehicle use preference configurations according to an embodiment of the invention. The automatic setting method for vehicle use preference configurations of a user according to an embodiment of the invention will be described below with reference to Figs. 1 and 2.

First, in step S310, a key ID of a key used to unlock the vehicle is recognized. In this step, once a certain user unlocks the vehicle with the key, the recognition component 111 in the CGW can simultaneously recognize the key ID.

In step S320, the recognized key ID is associated with the corresponding user ID. In this step, with the association module 112 in the CGW, for example, based on a table similar to the above Table I, the corresponding user ID can be found with the key ID, so as to realize the association. It should be noted that, if one key ID corresponds to multiple user IDs (for example, the multiple user IDs are all registered in this vehicle), then a corresponding human-machine interaction interface for selecting a user ID may pop up for the user to select the corresponding user ID. It should be understood that if one key ID corresponds to one and the same user ID or multiple key IDs correspond to one and the same user ID, there is no such a selection process.

In step S330, corresponding vehicle use preference configurations are retrieved according to the user ID of the user. This step can be completed in the retrieving unit 110 as shown in Fig. 1. When retrieving, the retrieving unit 110 may locally retrieve the corresponding vehicle use preference configurations from the vehicle (for example, directly from the local storage unit 130) or remotely retrieve the corresponding vehicle use preference configurations (for example, remotely from the remote storage end 200).

In this step, when the local storage unit 130 stores vehicle use preference configuration data of the user ID of the corresponding user, the data is preferentially retrieved from the local storage unit 130, so that the response speed is fast. When the local storage unit 130 does not store the vehicle use preference configuration data of the user ID of the corresponding user (when this user drives this vehicle for the first time), the user can remotely retrieve the vehicle use preference configuration data corresponding to the user ID of the user from the vehicle by remotely logging in with this user ID. Specifically, if the retrieving unit 110 does not detect the current user ID in the local storage unit 130, or if the vehicle use preference configuration data corresponding to the user ID is 0 or unavailable, an HMI (human-machine interaction) may pop up on the central control screen of the vehicle, for example, to guide the user to remotely log in with the user ID, for example, log in to the remote storage end 200, and then the retrieving unit 110 may retrieve the vehicle use preference configuration data corresponding to the user ID from the remote storage end 200. Of course, the vehicle use preference configuration data corresponding to the user ID that is retrieved from the remote storage end 200 may also be stored under the corresponding user ID in the local storage unit 130, and at this time, the user completes the registration or recording of the user ID on the vehicle as a new user.

In S340, the retrieved vehicle use preference configurations are sent to one or more corresponding components of the vehicle. For example, the configuration data corresponding to the steering wheel position in a file of the vehicle use preference configurations is sent to the steering wheel 910, and the configuration data corresponding to the seat position in the file of vehicle use preference configurations is sent to the seat 920. Specifically, it can be sent to various components through the CAN bus, so that the sending speed is fast. Generally, the vehicle use preference configurations include configuration data of multiple components, and therefore, the vehicle use preference configurations can be simultaneously sent to the multiple components.

In step S350, various components of the vehicle automatically perform adjustment of settings. In this step, each component of the vehicle can automatically perform adjustment of settings after receiving the corresponding vehicle use preference configuration. For example, the steering wheel 910 automatically completes the adjustment of settings of the steering wheel based on the corresponding configuration data, and the seat 920 automatically completes the adjustment of settings of the seat based on the corresponding configuration data. In this way, even if there are multiple corresponding components, the automatic adjustment of settings of multiple components can be completed at the same time, and a relatively preferred state is achieved for this user, and there is no need to perform adjustment of settings on the components one by one, thus leading to high efficiency and good experience. It should be noted that this adjustment of settings can be realized automatically. If the user still needs to perform adjustment of settings on a certain component after getting on the vehicle, the above adjustment of settings can be understood as an intelligent pre-adjustment for this user.

Therefore, the setting system 100 and the automatic setting method of the above embodiments have at least one of the following technical effects:
First, automatic adjustment of settings can be performed on the vehicle according to the user, who uses the vehicle, so as to enable the vehicle to change to the user's habitual or preferred state, thus leading to good user experience;
second, when the vehicle is unlocked by the key, the automatic adjustment of settings of each component can be completed, thus leading to good user experience;
third, even if the user changes to use a different vehicle, or a different vehicle of the same type, the corresponding vehicle use preference configurations can be obtained from, for example, the remote storage end 200 with the user ID, and therefore, the effect of the above first or second aspect can also be achieved; and
fourth, even if the same vehicle is used by the same user, the user can be intelligently recognized, and the adjustment of settings can be automatically performed for the user so as to change the vehicle to the user's preferred or habitual state.

It should be noted that, since the user's preferred or habitual component configurations may dynamically change, in an embodiment, the method also comprises a step of updating and storing the vehicle use preference configurations. In this step, when at least one of the vehicle use preference configurations of the user is modified and updated, the corresponding vehicle use preference configuration is updated and stored based on the user ID of the user. For example, if at least one of the steering wheel position, the seat position, the rearview-mirror underside position, the driving assistance settings and the driving mode is modified and updated, it means that the vehicle use preference configurations are modified and updated, and thus need to be updated and stored.

Fig. 3 shows a schematic diagram of the update and storage process of vehicle use preference configurations according to an embodiment of the invention.

Referring to Fig. 1 in combination with Fig. 3, 130₁ denotes a local storage unit of vehicle A, and 130₂ denotes a local storage unit of vehicle B, and they may represent user terminals; the remote storage unit 200 may be a server end or the cloud which establishes a connection with multiple user terminals and performs data transmission.

When at least one of the vehicle use preference configurations of the user is modified and updated, the corresponding vehicle use preference configuration is updated and stored in the local storage unit 130 based on the user ID of the user, that is, step S231. When the user performs a modification and update operation on vehicle A, step S231a is executed, and when the user performs a modification and update operation on vehicle B, step S231b is executed. In this step S231a or S231b, at each time of update and storage, a time stamp of storage is marked to indicate the modification and update time of the updated and stored vehicle use preference configurations. For example, the latest modification and update time of the vehicle use preference configurations of user X for vehicle A is recorded as T1 by time stamp, and the latest modification and update time of the vehicle use preference configurations of user X for vehicle B is recorded as T2 by time stamp.

Steps S232a, S232b, S233a and S233b shown in Fig. 3 illustrate the synchronization process of the remote storage unit 200 and the local storage unit of the vehicle. In this synchronization process, the direction of data synchronization between the local storage unit 130 and the remote storage end 200 is determined according to respective latest modification and update time of the vehicle use preference configurations for the same user ID at the local user storage unit 130 and the remote storage end 200. Steps S232a and S233a indicate data synchronization between the local storage unit 130₁ and the remote storage end 200. The direction of synchronization corresponding to step S232a is from the remote storage end 200 to the local storage unit 130₁. The direction of synchronization corresponding to step S233a is from the local storage unit 130₁ to the remote storage end 200. Steps S232b and S233b indicate data synchronization between the local storage unit 130₂ and the remote storage end 200. The direction of synchronization corresponding to step S232b is from the remote storage end 200 to the local storage unit 130₂. The direction of synchronization corresponding to step S233b is from the local storage unit 130₂ to the remote storage end 200.

In step S233b, the vehicle use preference configurations corresponding to the same user identity that are stored in the local storage unit 130₂ of vehicle B with a relatively late modification and update time are synchronized to the remote storage end 200 corresponding to the same user identity. That is, for the vehicle use preference configurations of the same user ID, if the modification and update time of the vehicle use preference configurations in the local storage unit 130₂ of vehicle B is later, the vehicle use preference configurations in the local storage unit 130₂ are synchronized to the remote storage end 200. When determining whether there is a relatively late modification and update time, it can be realized by comparing the time stamp of the user identity stored in the local storage unit 130₂ of vehicle B with the time stamp of the user identity stored in the remote storage end 200.

In step S232b, the vehicle use preference configurations corresponding to the same user identity that are stored in the remote storage end 200 with a relatively late modification and update time are synchronized to the local storage unit 130₂ of vehicle B corresponding to the same user identity. That is, for the vehicle use preference configurations of the same user ID, if the modification and update time of the vehicle use preference configurations in the local storage unit 130₂ of vehicle B is earlier, the vehicle use preference configurations in the remote storage end 200 are synchronized to the local storage unit 130₂. When determining whether there is a relatively late modification and update time, it can be realized by comparing the time stamp of the user identity stored in the local storage unit 130₂ of vehicle B with the time stamp of the user identity stored in the remote storage end 200.

In one case, if the vehicle use preference configurations of user X updated and modified at the latest time in vehicle B (for example, user X performed step S231b in vehicle B at the latest time point) need to be synchronized to vehicle A, the above steps S233b and S232a may be performed for implementation. In another case, if the vehicle use preference configurations of user X updated and modified at the latest time in vehicle A (for example, user X performed step S231a in vehicle A at the latest time point) need to be synchronized to vehicle B, the above steps S233a and S232b may be performed for implementation.

Through the above update and storage method, data synchronization of the vehicle use preference configuration data of a certain user can be easily achieved between local storage units of different vehicles, and between a local storage unit and a remote storage unit, so that the effect can be easily achieved that the vehicle use preference configurations of the user retrieved in step S330 are the vehicle use preference configurations modified by this user at the latest time, thereby preventing the user from further manually performing the adjustment of settings.

The invention also provides a vehicle configured with the setting system 100 of the embodiment shown in Fig. 1. For example, the CGW of the vehicle is integrated with the setting system 100. This vehicle may specifically be an electric vehicle.

The above examples mainly illustrate the setting system and automatic setting method for vehicle use preference configurations of the invention. Although only some embodiments of the invention are described, it will be appreciated by those skilled in the art that the invention may be embodied in many other forms without departing from the essence and scope thereof. Therefore, the examples and embodiments shown should be considered as illustrative rather than restrictive, and various modifications and replacements may be covered by the invention without departing from the spirit and scope of the invention as defined in the appended claims.

## Claims

1. A setting system for vehicle use preference configurations, **characterized by** comprising:
a retrieving unit for retrieving corresponding vehicle use preference configurations according to a user identity of a user; and
a sending unit for sending the retrieved vehicle use preference configurations to one or more corresponding components of a vehicle.

2. The setting system of claim 1, **characterized in that** the retrieving unit is further configured to comprise:
a recognition component for recognizing a key identity of a key used to unlock the vehicle; and
an association module for associating the key identity with the corresponding user identity.

3. The setting system of claim 1, **characterized in that** the vehicle use preference configurations comprise at least one of the following: a steering wheel position, a seat position, a rearview-mirror underside position, driving assistance settings and a driving mode.

4. The setting system of claim 1, **characterized in that** the retrieving unit is further configured to locally retrieve corresponding vehicle use preference configurations from the vehicle or remotely retrieve corresponding vehicle use preference configurations.

5. The setting system of claim 1, **characterized in that** the retrieving unit is further configured to enable the user to remotely retrieve the vehicle use preference configurations corresponding to the user identity from the vehicle by remotely logging in with the user identity of the user.

6. The setting system of claim 1, **characterized by** further comprising a local storage unit for locally storing the vehicle use preference configurations corresponding to all the user identities that have been registered in the vehicle.

7. The setting system of claim 6, **characterized in that** the setting system is also coupled to a remote storage end which is used for remotely storing vehicle use preference configurations corresponding to all the user identities that have been registered in different vehicles.

8. The setting system of claim 1, **characterized in that** the local storage unit and the remote storage end further store a time stamp for the vehicle use preference configurations corresponding to the user identity at each time of modification and update.

9. The setting system of claim 7, **characterized by** further comprising a synchronization unit for managing synchronization and update between the vehicle use preference configurations for the same user identity that are respectively stored in the local storage unit and the remote storage end.

10. The setting system of claim 9, **characterized in that** the synchronization unit is further configured to: determine the direction of data synchronization between the local storage unit and the remote storage end according to respective latest modification and update time of the vehicle use preference configurations for the same user identity at the local storage unit and the remote storage end.

11. The setting system of claim 6, **characterized in that** the retrieving unit, the sending unit and the local storage unit are arranged in a central gateway of the vehicle, or implemented by the central gateway of the vehicle.

12. The setting system of claim 7, **characterized in that** the remote storage end is arranged in a telematics service provider, or in the cloud.

13. The setting system of claim 1, **characterized in that** the setting system is further configured to allow a mobile terminal to log in with the user identity, and to manage the vehicle use preference configurations corresponding to the user identity.

14. A vehicle, **characterized in that** the vehicle is configured with the setting system for vehicle use preference configurations of any one of claims 1 to 13.

15. An automatic setting method for vehicle use preference configurations of a user, **characterized by** comprising the steps of:
retrieving corresponding vehicle use preference configurations according to a user identity of the user; and
sending the retrieved vehicle use preference configurations to one or more corresponding components of a vehicle.

16. The automatic setting method of claim 15, **characterized by** further comprising the steps of:
recognizing a key identity of a key used to unlock the vehicle; and
associating the key identity with the corresponding user identity.

17. The automatic setting method of claim 15, **characterized in that** the use preference configurations comprise at least one of the following: a steering wheel position, a seat position, a rearview-mirror underside position, driving assistance settings and a driving mode.

18. The automatic setting method of claim 15, **characterized in that** in the step of retrieving vehicle use preference configurations:
corresponding vehicle use preference configurations are locally retrieved from the vehicle or corresponding vehicle use preference configurations are remotely retrieved.

19. The automatic setting method of claim 15, **characterized by** further comprising a step of updating and storing the vehicle use preference configurations: when at least one of the vehicle use preference configurations of the user is modified and updated, updating and storing the vehicle use preference configuration based on the user identity of the user.

20. The automatic setting method of claim 19, **characterized in that** in the step of updating and storing the vehicle use preference configurations, the vehicle storage preference configurations are locally updated and stored in a local storage unit of the vehicle.

21. The automatic setting method of claim 19, **characterized in that** the step of updating and storing the vehicle use preference configurations further comprises a sub-step of synchronization: determining the direction of data synchronization between the local storage unit and the remote storage end according to respective modification and update time of the vehicle use preference configurations for the same user identity at the local storage unit and the remote storage end.

22. The automatic setting method of claim 21, **characterized in that** the sub-step of synchronization comprises:
synchronizing the vehicle use preference configurations corresponding to the same user identity that are stored in a local storage unit of a first vehicle with a relatively late modification and update time to a remote storage end corresponding to the same user identity; and/or
synchronizing the vehicle use preference configurations corresponding to the same user identity that are stored in the remote storage end with a relatively late modification and update time to a local storage unit in a second vehicle corresponding to the same user identity.

23. The automatic setting method of claim 22, **characterized in that**: in the step of updating and storing the vehicle use preference configurations, at each time of update and storage, a corresponding time stamp is simultaneously stored to indicate the modification and update time of the updated and stored vehicle use preference configurations; and
in the sub-step of synchronization, based on the time stamp, it is determined which of the modification and update time of the vehicle use preference configurations corresponding to the same user identity that are respectively stored in the local storage unit and the remote storage end is relatively late.

24. A computer device, comprising a memory, a processor, and a computer program stored on the memory and operable on the processor, **characterized in that** the processor, when executing the program, implements the steps of the automatic setting method of any one of claims 15 to 23.

25. A computer-readable storage medium having a computer program stored thereon, **characterized in that** the program is executed to implement the steps of the automatic setting method of any one of claims 15 to 23.
